# EUROPÄISCHE PATENTSCHRIFT

(11) **EP 2 325 450 B1**
(45) Veröffentlichungstag und Bekanntmachung des Hinweises auf die Patenterteilung: **19.03.2014**
(21) Anmeldenummer: 10006711.5
(22) Anmeldetag: 29.06.2010
(51) Int. Cl.: F01N 3/20, B01D 53/94, F01N 3/10, F01N 3/033, F01N 3/035, F01N 13/02

(54) **Vorrichtung zur Nachbehandlung von Abgasen einer Brennkraftmaschine**
Device for treating exhaust gases of a combustion engine
Dispositif de post-traitement de gaz d'échappement d'un moteur à combustion interne

(30) Priorität: 19.11.2009 DE 102009053949
(43) Veröffentlichungstag der Anmeldung: 25.05.2011
(73) Patentinhaber: MAN Truck & Bus AG, 80995 München (DE)
(72) Erfinder: Griesbeck, Roland, 90469 Nürnberg (DE)

(56) Entgegenhaltungen:
- EP-A1- 1 748 162
- WO-A1-99/30811
- WO-A1-2009/011080

## Beschreibung

Die Erfindung betrifft eine Vorrichtung zur Nachbehandlung von Abgasen einer Brennkraftmaschine gemäß dem Oberbegriff des Patentanspruches 1.

Zur Nachbehandlung von Abgasen von Brennkraftmaschinen ist es u.a. bekannt, zur Reduktion der NOx-Bestandteile in die Abgasanlage eine Dosiereinrichtung für Harnstoff einzuschalten, wobei der eingedüste Harnstoff sich möglichst homogen mit dem heißen Abgas vermischen soll. Der Harnstoff kann in den gesamten Abgasstrom oder gemäß der EP 1 052 009 A1 in einen Abgasteilstrom eingebracht und in einem Hydrolysekatalysator mit einer definierten Reaktionsstrecke der Hydrolyse unterzogen werden. Der Hydrolysekatalysator mit gegebenenfalls einem diesen umgebenden Wärmetauscher zum übrigen Abgasteilstrom kann dabei in den Abgastrakt integriert sein, wobei die beiden Abgasteilströrne parallel zueinander ausgerichtet sind. Dies kann insbesondere bei sehr kompakt aufgebauten Abgasanlagen gegebenenfalls zu baulichen Problemen führen.

Die europäische Patentenanmeldung EP 1 748 162 A1 lehrt ein System zur Abgasnachbehandlung das bei unterschiedlichen Abgastemperaturen unterschiedliche Düsen zur Injektion von Harnstoff in das Abgas verwendet.

Ein Teil des Abgasstromes (Teilstrom) wird abgezweigt und durch einen vom Hauptabgasstrom getrennten Kanal geführt innerhalb dessen eine Beimengung von Harnstoff erfolgt. Der mit Harnstoff versetzte Teilstrom durchläuft einen Hydrolysekatalysator und wird anschließend wieder in den Hauptabgasstrom eingeleitet.

Aufgabe der Erfindung ist es, eine Vorrichtung zur Nachbehandlung von Abgasen einer Brennkraftmaschine vorzuschlagen, die bei einer besonders effizienten Anordnung des Reaktors bzw. eines Reduktionsmittelzersetzungs-katalysators zudem eine sehr kompakte, kurz bauende Konstruktion mit optimierter Reaktionsstrecke ermöglicht.

Diese Aufgabe wird erfindungsgemäß mit den Merkmalen des Patentanspruches 1 gelöst. Vorteilhafte Weiterbildungen der Erfindung sind Gegenstand der Unteransprüche.

Gemäß Anspruch 1 ist eine Vorrichtung zur Nachbehandlung von Abgasen einer Brennkraftmaschine mit wenigstens einem in den Abgasstrom geschalteten Reaktor vorgesehen, der einen Reduktionsmittelzersetzungskatalysator, insbesondere einen Hydrolysekatalysator, aufweist und welche Vorrichtung weiter eine stromauf hierzu angeordnete Dosiereinrichtung zur Zuführung von Reduktionsmittel, insbesondere zur Zuführung einer wässrigen Harnstofflösung, aufweist, wobei dem Reaktor bevorzugt wenigstens eine weitere Katalysatoreinrichtung, insbesondere wenigstens ein SCR-Katalysator, nachgeschaltet ist. Erfindungsgemäß ist der Reaktor in ein von einem Abgasstrom durchströmtes Gehäuse integriert, von dem ein Totrohr abragt, in das ein Reaktor-Einlassrohr des Reaktors mündet oder einragt, wobei ein Abgasstrom, der vorzugsweise durch einen von einem Hauptabgasstrom abgezweigten Teilstrom gebildet ist, aus dem Gehäuse über wenigstens eine Einströmöffnung in das Totrohr einströmt, wo der Abgasstrom nach einer ein- oder mehrmaligen Strömungsumlenkung in einem Totrohr-Strömungsumlenkbereich, in dem dem Abgasstrom mittels der Dosiereinrichtung ein Reduktionsmittel zudosierbar ist, in das Reaktor- Einlassrohr einströmt.

Mit einer derartigen erfindungsgemäßen Anordnung wird eine relativ lange Reaktionsstrecke für das Reduktionsmittel zur Verfügung gestellt und damit eine zum Beispiel Hydrolysestrecke als Reaktionsstrecke maximiert. Zudem lässt sich die Einströmstrecke des Abgases vorteilhaft verlängern, wodurch sich, im Verhältnis zu einer kurzen, üblichen Einströmstrecke, eine gleichmäßigere Strömung ausbildet. Weiter wird durch das in das Totrohr einragende Reaktor-Einlassrohr eine Strömungsumlenkung des Abgasstroms um zum Beispiel ca. 180 Grad im Bereich der Eindüsung des Reduktionsmittels erzielt, wodurch eine besonders homogene Durchmischung des zum Beispiel Harnstoffes als Reduktionsmittel mit dem Abgasteilstrom erzielt wird. Durch die Integration des Reaktors in ein von einem Abgasstrom durchströmtes Gehäuse wird zudem erreicht, dass sich der Reduktionsmittelzersetzungskatalysator beziehungsweise die Reaktionsstrecke stets auf einem für die Reaktion notwendigen Temperaturniveau befindet. Und schließlich liegt ein weiterer besonderer Vorteil einer derartigen gehäuseintegrierten Lösung darin, dass dem Reduktionsmittelzersetzungskatalysator auf einfache Weise lediglich ein Teilabgasstrom für die bevorzugte Verwendung der erfindungsgemäßen Vorrichtung in Verbindung mit einer Teilstromhydrolyse zugeführt werden kann. Grundsätzlich kann die erfindungsgemäße Vorrichtung aber auch im Vollstrom angeordnet sein.

Die Einlassöffnung wird dabei vorzugsweise durch wenigstens eine zwischen Totrohr und Reaktor-Einlassrohr ausgebildete Einströmöffnung gebildet, die wiederum vorzugsweise durch wenigstens einen wenigstens bereichsweise umlaufenden Strömungsspalt zwischen dem Totrohr und dem Reaktor-Einlassrohr gebildet ist. Durch entsprechende Dimensionierung der wenigstens einen Einströmöffnung bzw. des wenigstens einen Einströmspaltes und/oder des Totrohres und/oder des Reaktor-Einlassrohres kann zudem der in das Totrohr einströmende Abgasstrom in einer gewünschten Weise gedrosselt werden, um zum Beispiel die für die Zudosierung des Reduktionsmittels in den Abgasstrom gewünschten Strömungsverhältnisse einzustellen.

Die Begrifflichkeit Rohr soll vorliegend ausdrücklich sämtliche Querschnittsformen umfassen, also zum Beispiel runde oder eckige Rohrquerschnitte.

Gemäß einer bevorzugten funktionsintegrierten Lösung ist vorgesehen, dass im Strömungsumlenkbereich eine am Totrohr, insbesondere an einer Stirnwand des Totrohrs, gehalterte Düse der Dosiereinrichtung angeordnet ist, die zudem einer Einlassöffnung des bevorzugt einen Einlasstrichter aufweisenden Reaktor-Einlassrohrs mit einem definierten Abstand gegenüberliegt. Durch diese auf den Reaktor zu ausgerichtete Reduktionsmittelzudosierung wird auf einfache Weise sichergestellt, dass das zudosierte Reduktionsmittel auch mitsamt dem Abgasstrom in den Reaktor einströmt.

Besonders bevorzugt ist zudem ein Aufbau, bei dem das Totrohr im montierten Zustand der Vorrichtung von einem geodätisch oberen Gehäusewandbereich abragt, insbesondere in etwa vertikal nach oben abragt. Durch die vertikal beziehungsweise geodätisch über dem Reaktor-Einlassrohr positionierte Düse können sich gegebenenfalls bildende Reduktionsmittel- bzw. Harnstofftröpfchen nicht an den Rohrwandungen ablagern, sondern werden im Abgasstrom mitgeführt und aufgelöst, beziehungsweise "fallen" nach unten, zum Beispiel auf eine nachfolgend noch näher beschriebene Mischerstruktur. Besonders bevorzugt ist hierbei ein konkreter Aufbau, bei dem das Totrohr von einer eine Ausströmkammer eines Schalldämpfers wenigstens bereichsweise begrenzenden Seitenwand abragt.

Das bevorzugt trichterförmige Einlassrohr ermöglicht zudem ein symmetrisches Einströmen und trägt vorteilhaft zu einer Homogenisierung des eingedüsten Reduktionsmittels mit dem Abgasteilstrom bei und wirkt weiter unerwünschten Wandablagerungen desselben im Reduktionsmittelzersetzungskatalysator entgegen.

Weiter kann vorgesehen sein, dass das Reaktor-Einlassrohr zumindest abschnittweise perforiert ausgebildet ist, wodurch eine weiter verbesserte Durchmischung des Harnstoffes mit dem Abgas erreicht wird; ferner kann damit verbunden der im Reduktionsmittelzersetzungskatalysator sich gegebenenfalls aufbauende Abgasgegendruck vermindert werden. Das Reaktor-Einlassrohr mündet gemäß einer konkreten konstruktiven Ausgestaltung in einer Gehäusewand des Gehäuses und/oder ist gasdicht durch diese hindurchgeführt.

Gemäß einer bevorzugten Ausgestaltung der Vorrichtung ist zudem vorgesehen, dass diese so aufgebaut ist, dass der in das Totrohr und/oder in das Reaktor-Einlassrohr einströmende Abgasstrom im Wesentlichen senkrecht zur Strömungsrichtung des in das Gehäuse einströmenden Abgasstroms ausgerichtet ist. Eine derartige Querdurchströmung des Reaktors mit Bezug zu einer Längsdurchströmung des Gehäuses ermöglicht auf einfache Weise die Ausbildung einer relativ langen Reaktionsstrecke und somit eine verbesserte Durchmischung des zum Beispiel Harnstoffes mit dem Abgas sowie weiter eine sehr effiziente Spaltung der NOx-Bestandteile im Abgas in N₂ und H₂O.

Insbesondere in Verbindung mit einer Ausgestaltung, bei der lediglich ein Teilstrom des in das Gehäuse einströmenden Abgasstroms durch den Reaktor geleitet wird, das heißt bei einer Ausgestaltung, bei der die Abgasteilströmung über einen zum Beispiel Strömungsspalt als Totrohr-Einströmöffnung und das Totrohr zunächst in Richtung nach außerhalb des Gehäuses und anschließend über das Reaktor-Einlassrohr in Strömungsumkehr wieder nach innerhalb des Gehäuses geleitet wird, kann im Gehäuse auch wieder eine Vermischung mit wenigstens einem Teil des nicht über den Reaktor geführten Restabgasstroms vorgesehen sein. Dies kann beispielsweise mittels Einström- bzw. Bypassöffnungen oder dergleichen realisiert werden, die eine wenigstens teilweise Zusammenführung von Abgasströmen ermöglichen. Beispielsweise können zwei Abgasteilströme unter Umlenkung in zum Beispiel Querrichtung baulich und strömungsdynamisch günstig abgeführt werden, wobei der nicht behandelte Abgasteilstrom über einen Bypass direkt und der im Reaktor behandelte Abgasteilstrom indirekt in ein Ausströmrohr aus dem Gehäuse eingeleitet werden. Konkrete Lösungen hierzu werden nachfolgend noch beispielhaft in Verbindung mit weiteren bevorzugten Ausgestaltungen der vorliegenden Erfindung beschrieben.

Besonders bevorzugt ist eine erfindungsgemäße Weiterbildung, bei der ein in das Gehäuse einmündendes oder einragendes Ausströmrohr mittelbar mittels einer im Gehäuse angeordneten Überströmeinrichtung des Reaktors oder unmittelbar mit dem Einlassrohr strömungsleitend verbunden ist. Bevorzugt ist hierbei eine derartige Überströmeinrichtung so ausgebildet, dass der durch das Reaktor-Einlassrohr einströmende Abgasstrom vor dessen Ausströmen durch das bevorzugt benachbart zum Totrohr angeordnete Ausströmrohr entlang einer definierten wenigstens einen Umlenkbereich aufweisenden und/oder wenigstens einen Teilbereich des Gehäusevolumens durchgreifenden und/oder wenigstens einen Reduktionsmittelkatalysator aufweisenden Reaktionsstrecke strömt. Daraus resultiert bei einer baulich kurzen Konstruktion eine relativ lange Reaktionsstrecke im Reaktor mit dem Vorteil einer ein- oder mehrmaligen Strömungsumlenkung und einer damit verbundenen Maximierung einer zum Beispiel Hydrolysestrecke. Beispielsweise ist die Überströmeinrichtung so ausgebildet ist, dass der in das Reaktor-Einlassrohr einströmende Abgasstrom in etwa bis zu einem gegenüberliegenden Gehäusewandbereich geführt wird und/oder um in etwa 180° umgelenkt wird, bevor dieser Abgasstrom über das benachbart zum Totrohr in der Gehäusewand mündende Ausströmrohr abströmt.

Bevorzugt ist im Bereich des Reaktor-Einlassrohres und/oder im Bereich der Überströmeinrichtung zumindest ein Reduktionsmittelzersetzungskatalysator vorgesehen ist, welcher weiter bevorzugt durch wenigstens eine katalytisch beschichtete Mischerstruktur, insbesondere wenigstens eine mittels einer TiO-Beschichtung versehene Mischerstruktur, gebildet ist. Eine derartige Mischerstruktur bewirkt durch innere Strömungsumlenkungen eine wirkungsvolle Zersetzung und Auflösung des zum Beispiel Harnstoffes als Reduktionsmittel im Abgasstrom. Von einer gegebenenfalls geodätisch und/oder vertikal darüber liegenden Düse der Dosiereinrichtung gegebenenfalls abtropfender Harnstoff kann zudem mit einer derartigen Mischerstruktur wirkungsvoll verdampft werden. Auch das Einlassrohr kann katalytisch wirksam beschichtet sein, um ebenfalls gegebenenfalls auftretenden Wandablagerungen des zum Beispiel Harnstoffes als Reduktionsmittel entgegenzuwirken. Auch hier kann die Beschichtung insbesondere eine TiO-Beschichtung sein, die sich als besonders wirksam erwiesen hat.

Gemäß einer ersten bevorzugten Ausführungsform der Überströmeinrichtung kann vorgesehen sein, dass das Reaktor-Einlassrohr mittels einer Rohrleitung, die bevorzugt durch einen einen definierten Bogenwinkel aufweisenden Rohrbogen gebildet ist, mit dem Ausströmrohr, insbesondere mit einem in das Gehäuse einragenden Abschnitt des Ausströmrohres, verbunden ist, wobei im ausströmrohrnahen Rohrleitungsbereich und/oder in dem einragenden Abschnitt wenigstens eine Bypass-Öffnung vorgesehen ist, die einen Bypass zu einem umgebenden Gehäusebereich bildet und somit eine Vermischung der Abgasströme ermöglicht. Mit einer derartigen innenliegenden und vom heißen Abgas umströmten Überströmeinrichtung wird eine besonders optimale Aufheizung des den Reduktionsmittelzersetzungskatalysator aufweisenden Reaktorbereiches erzielt, da dieser innerhalb des Gehäuses keiner Abkühlung nach außen unterliegt.

Alternativ dazu kann die Überströmeinrichtung baulich besonders günstig aber zum Beispiel auch durch eine im Gehäuse gasdicht abgeteilte Überströmkammer ausgebildet sein, in die das Reaktor-Einlassrohr und ein in das Gehäuse einragender Abschnitt des Ausströmrohres einmünden, wobei im Abschnitt des Ausströmrohres und/oder im Bereich der Überströmkammer wiederum wenigstens eine Bypass-Öffnung, insbesondere Perforationslöcher und/oder ein Ringspalt, vorgesehen sein kann, die einen Bypass zu einem umgebenden Gehäusebereich bilden. Durch eine entsprechende Gestaltung der Überströmkammer kann gegebenenfalls der innenliegende Abschnitt des Ausströmrohres entfallen und dieses zum Beispiel an einer näher einem zum Beispiel Hauptschalldämpfer liegenden Seitenwand eines dann Vorschalldämpfers als Gehäuse herausgeführt werden.

Das Gehäuse kann grundsätzlich durch jedes Gehäuse gebildet sein, in das ein Abgasstrom ein- und ausströmt. Besonders bevorzugt ist jedoch eine Ausgestaltung, bei der der Reaktor in einen Schalldämpfer einer Abgasanlage, vorzugsweise in eine Ausströmkammer eines Schalldämpfers, integriert ist. Durch die Integration des Reduktionsmittelzersetzungskatalysators in einen Schalldämpfer der Abgasanlage, zum Beispiel in einen Vorschalldämpfer einer mehrteiligen Abgasanlage, kann die dort zum Beispiel vorhandene oder ausgebildete Abströmkammer in einer Doppelfunktion vorteilhaft zur packagetechnisch kompakten Unterbringung des Reaktors mitsamt Reduktionsmittelzersetzungskatalysators genutzt werden, wobei die Ausmaße des Schalldämpfers in Länge oder Breite beziehungsweise Durchmesser nicht oder nur unwesentlich zunehmen.

Besonders bevorzugt ist eine Ausgestaltung, bei der die Abgasanlage mehrere Schalldämpfer aufweist und der wenigstens eine aus der Ausströmkammer eines Vorschalldämpfers ausströmende Abgasstrom über ein bevorzugt quer zur Strömungsrichtung des Vorschalldämpfers ausgerichtetes Zwischenrohr als Ausströmrohr zu einem Hauptschalldämpfer geführt ist. Die Begrifflichkeit Vor- und Hauptschalldämpfer soll hier vor allem zum Ausdruck bringen, dass es sich um nacheinander vom Abgas durchströmte Schalldämpfer handelt; selbstverständlich kann es sich hierbei auch um zwei hinsichtlich der Schalldämpfung gleichwertige Schalldämpfer handeln.

Eine besonders wirkungsvolle Nachbehandlung des Abgases insbesondere einer Diesel-Brennkraftmaschine wird schließlich dadurch erzielt, dass bei mehreren Schalldämpfern vorgesehen ist, dass in einem Vorschalldämpfer stromauf des Reduktionsmittelzersetzungskatalysators ein Oxidationskatalysator und/oder ein Dieselpartikelfilter angeordnet ist und dass bevorzugt des Weiteren der dem Vorschalldämpfer über das Zwischenrohr nachgeschaltete Hauptschalldämpfer SCR-Katalysatoren, gegebenenfalls mit entsprechenden NH₃-Sperrkatalysatoren aufweist.
Zwei Ausführungsbeispiele der Erfindung sind im Folgenden mit weiteren Einzelheiten näher erläutert. Die schematische Zeichnung zeigt in:
- Fig. 1: eine Abgasanlage für eine Brennkraftmaschine in einem Kraftfahrzeug, mit einem Vorschalldämpfer, einem Hauptschalldämpfer und einem in den Vorschalldämpfer integrierten, einen Hydrolysekatalysator als Reduktionsmittelzersetzungskatalysator aufweisenden Reaktor,
- Fig. 2: eine Ansicht in Richtung des Pfeiles X der Fig. 1 auf den Reaktor in einer ersten Ausführungsform, und
- Fig. 3: eine Ansicht in Richtung des Pfeiles X der Fig. 1 auf den Reaktor in einer alternativen Ausführungsform.

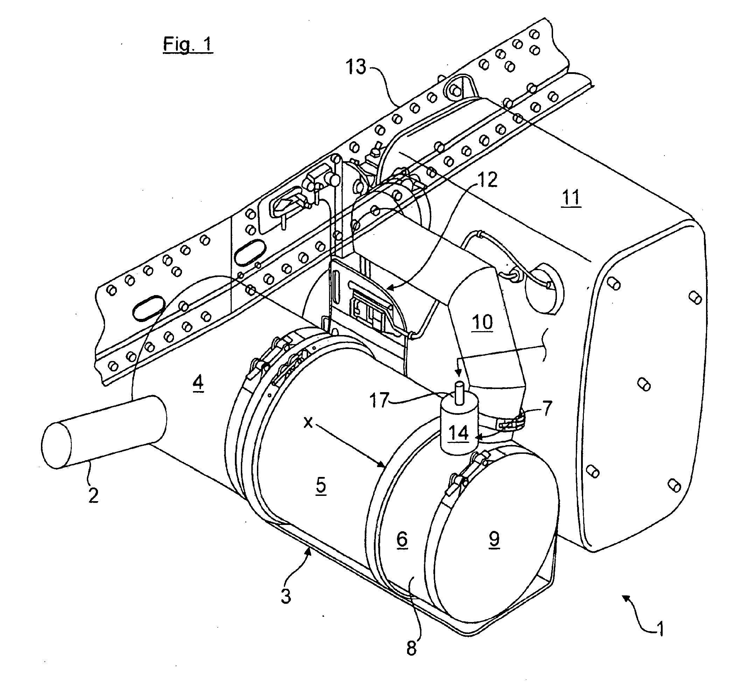

In der Fig. 1 ist teilweise eine Abgasanlage 1 für eine Diesel-Brennkraftmaschine für zum Beispiel Nutzfahrzeuge dargestellt, mit einem an die Brennräume der Brennkraftmaschine in üblicher Weise angeschlossenem Abgas-Vorrohr 2, das in einen hier beispielhaft zylinderförmigen Vorschalldämpfer 3 mündet, der hier ein Gehäuse ausbildet, in dem ein Reaktor 7 in noch zu beschreibender Weise angeordnet ist.

Der Vorschalldämpfer 3 weist in Strömungsrichtung des Abgases betrachtet hier lediglich beispielhaft einen Oxidationskatalysator 4, einen Dieselpartikelfilter 5 (DPF) und einen in eine Ausströmkammer 6 integrierten Reaktor 7 auf. Andere Anordnungen sind selbstverständlich jederzeit möglich. Die Ausströmkammer 6 des Vorschalldämpfers 3 grenzt unmittelbar an die Austrittskanäle (nicht dargestellt) des DPF 5 an und ist ferner durch die radiale Umfangswand 8 und die abströmseitige Stirnwand 9 des Vorschalldämpfers 3 begrenzt.

Von der Ausströmkammer 6 wird der gesamte Abgasstrom über ein Zwischenrohr 10 einem hier beispielhaft parallel zum Vorschalldämpfer 3 angeordneten sowie hier beispielhaft etwa quaderförmigen Hauptschalldämpfer 11 zugeführt, in dem zumindest ein SCR-Katalysator (SCR = Selektive katalytische Reduktion) mit bevorzugt zumindest einem nachgeschalteten NH₃-Sperrkatalysator integriert ist.

Die besagten Katalysatoren an sich und der DPF sind üblicher Bauart und Konstruktion und deshalb nicht näher dargestellt und beschrieben.

Die Abgasanlage 1 gemäß Fig. 1 ist über nicht näher dargestellte Aufhängungsmittel 12 an einem Längsträger 13 des Unterbaus des Fahrzeuges bevorzugt elastisch aufgehängt. Das vom Hauptschalldämpfer 11 wegführende Endrohr der Abgasanlage 1 ist in der gezeigten Ansicht nicht ersichtlich.

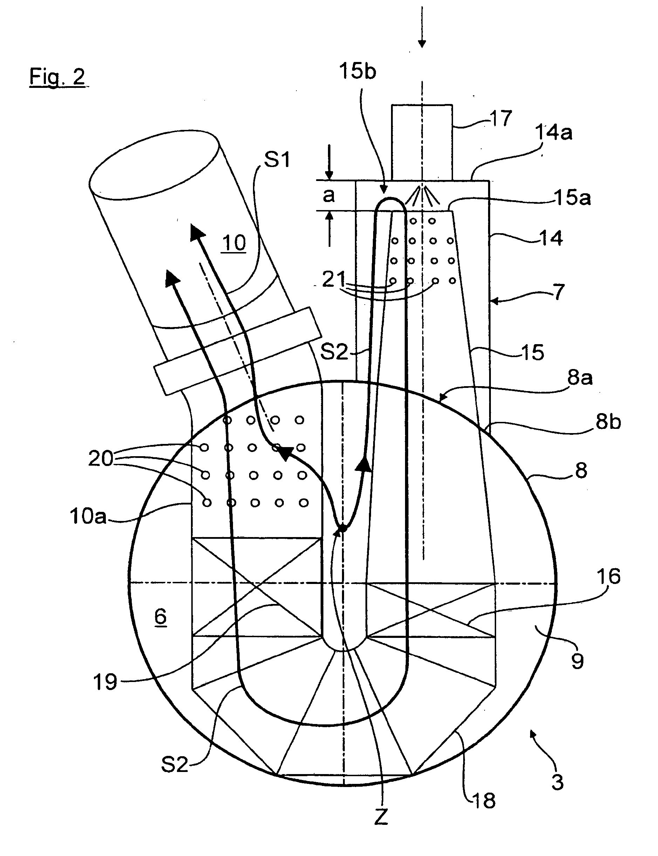

Die Fig. 2 zeigt in der Ansicht X der Fig. 1 den in der Ausströmkammer 6 angrenzend an die Stirnwand 9 ausgebildeten Reaktor 7, der sich im wesentlichen aus einem an die Umfangswand 8 anschließenden, im Wesentlichen vertikalen Totrohr 14 und einem im Totrohr 14 koaxial angeordneten, trichterförmig in Abgasströmungsrichtung erweiternden Rohrstutzen 15 als Reaktor-Einlassrohr mit einer daran innerhalb der Ausströmkammer 6 anschließenden und den Hydrolysekatalysator ausbildenden Mischerstruktur 16 zusammensetzt.

An das vertikal nach oben und quer zur Abgasströmungsrichtung im Vorschalldämpfer 3 ausgerichtete Totrohr 14 ist an dessen geschlossener Stirnseite 14a eine nur schematisch dargestellte Düse 17 einer Dosiereinrichtung (nicht dargestellt) für eine wässrige Harnstofflösung vorgesehen, über die abhängig von Betriebsparametern der Brennkraftmaschine (Drehzahl, Last, etc.) Harnstoff (zum Beispiel AdBlue ®) eindosierbar ist. Die Düse 17 liegt dabei in einem definierten Abstand a der offenen Stirnseite 15a des trichterförmigen Rohres 15 gegenüber. Die Düse 17 beziehungsweise das Totrohr 14a können dabei, falls erforderlich, mit einer hier nicht gezeigten thermischen Isolierung versehen sein.

Das von der Umfangswand 8 des Vorschalldämpfers 3 nach oben abragende Totrohr 14 ist an eine korrespondierende Öffnung 8a in der Umfangswand 8 gasdicht angeschlossen und verbindet somit das Totrohr 14 mit der Ausströmkammer 6 im Vorschalldämpfer 3. Damit kann Abgas von der Ausströmkammer 6 über einen Strömungsspalt 8b in das Totrohr 14 und von diesem unter einer Strömungsumlenkung um 180 Grad im Bereich der Düse 17 beziehungsweise in einem Strömungsumlenkbereich 15b ringförmig in den trichterförmigen Rohrstutzen 15 einströmen, wobei in diesem turbulenten Strömungsumlenkbereich 15b der Harnstoff mittels der Düse 17 zu definierten Zeitpunkten für eine definierte Zeitdauer und in definierter Menge eingedüst wird.

Der nach unten in die Ausströmkammer 6 einragende, trichterförmige Rohrstutzen 15 des Reaktors 7 mit der Mischerstruktur 16 weist eine definierte Reaktionsstrecke (Länge) mit maximierter Hydrolysestrecke auf und ist über einen 180°-Rohrbogen 18 an einen parallel zum trichterförmigen Rohrstutzen 15 verlaufenden Abschnitt 10a des Zwischenrohres 10 gasdicht angeschlossen. Der Abschnitt 10a ragt wie ersichtlich ebenfalls in die Ausströmkammer 6 ein.

In dem Abschnitt 10a des Zwischenrohres 10 ist eine weitere Mischerstruktur 19 eingesetzt. Die nicht im Detail ersichtlichen Mischerstrukturen 16, 19 weisen zum Beispiel labyrinthartige Zwischenwände auf, mittels denen das durchströmende Abgas mehrfach umgelenkt wird, um eine verbesserte Durchmischung des eingedüsten Harnstoffes mit dem Abgas sicherzustellen. Zusätzlich sind die Innenflächen des trichterförmigen Rohres 15 und der Mischerstrukturen 16, 19 mit einer TiO-Beschichtung versehen, die unerwünschten Wandablagerungen von Harnstoff entgegenwirkt.

Ferner sind in dem in die Ausströmkammer 6 einragenden Abschnitt 10a des Zwischenrohres 10 eine Anzahl von Öffnungen 20 eingearbeitet, die einen definierten Bypass bildend, den Abschnitt 10a unmittelbar mit der Ausströmkammer 6 verbinden. Der Gesamtquerschnitt dieser Öffnungen 20 definiert den Abgasteilstrom, der unter Umgehung des Reaktors 7 direkt in das Zwischenrohr 10 geleitet wird. Es versteht sich, dass dieser Querschnitt auf den Durchströmquerschnitt des Reaktors 7 und dessen zwangsläufig verursachten Abgasgegendruckes abgestimmt sein muss.

Des Weiteren sind in dem trichterförmigen Rohrstutzen 15 des Reaktors 7 im oberen und hier lediglich beispielhaft außerhalb der Ausströmkammer 6 liegenden Bereich und umlaufend über den Rohrstutzen 15 Öffnungen beziehungsweise Perforationen 21, zum Beispiel in Form von Bohrungen geringen Durchmessers, eingearbeitet, die durch eine definierte Wandablösung (Grenzströmung) des durchgesetzten Abgasteilstromes eine verbesserte Durchmischung mit Harnstoff und eine nicht unbeachtliche Verringerung des Abgasgegendruckes im Reaktor 7 bewirken.

Im Betrieb der Brennkraftmaschine wird der gesamte Abgasmassenstrom zunächst durch den Oxidationskatalysator 4 und den DPF 5 geführt, wobei Abgasbestandteile oxidiert und Russpartikel katalytisch aufgelöst werden.

Stromab des DPF 5 wird der Abgasmassenstrom in zwei Abgasteilströme aufgeteilt, was in der Fig. 2 schematisch mit dem Bezugszeichen Z bezeichnet ist.

Dabei wird der eine Abgasteilstrom S1 über die Öffnungen 20 im Abschnitt 10a direkt in das Zwischenrohr 10 geleitet, während der andere Abgasteilstrom S2 quer zur Strömungsrichtung im Vorschalldämpfer 3 über den ringförmigen Spalt 8b zwischen dem Totrohr 14 und dem trichterförmigen Rohrstutzen 15 durch die Öffnung 8a in der Umfangswand 8 des Vorschalldämpfers 3 radial nach außen in das Totrohr 14 einströmt.

Im Bereich 15b der Strömungsumlenkung um 180 Grad wird der Harnstoff abhängig von der momentanen Abgasteilmenge über die Düse 17 eingedüst und dem trichterförmigen Rohrstutzen 15 zugeführt. Von dort strömt das Abgas wieder nach innen und wird schließlich über die Mischerstruktur 16, den Rohrbogen 18 und die Mischerstruktur 19 in den Abschnitt 10a des Zwischenrohres 10 geführt. Die eigentliche Hydrolysereaktion findet dabei im Wesentlichen ab der Mischerstruktur 16 statt.

Im Abschnitt 10a vermischen sich im Bereich der Öffnungen 20 die beiden Abgasteilströme S1 und S2 wieder zu einem Abgasstrom, der über das Zwischenrohr 10 dem Hauptschalldämpfer 11 mit dem integrierten SCR-Katalysator und dem NH3-Sperrkatalysator zugeführt wird, indem schließlich die Umwandlung des im Abgas befindlichen NOₓ mit NH₃ zu N₂ und H₂O erfolgt.

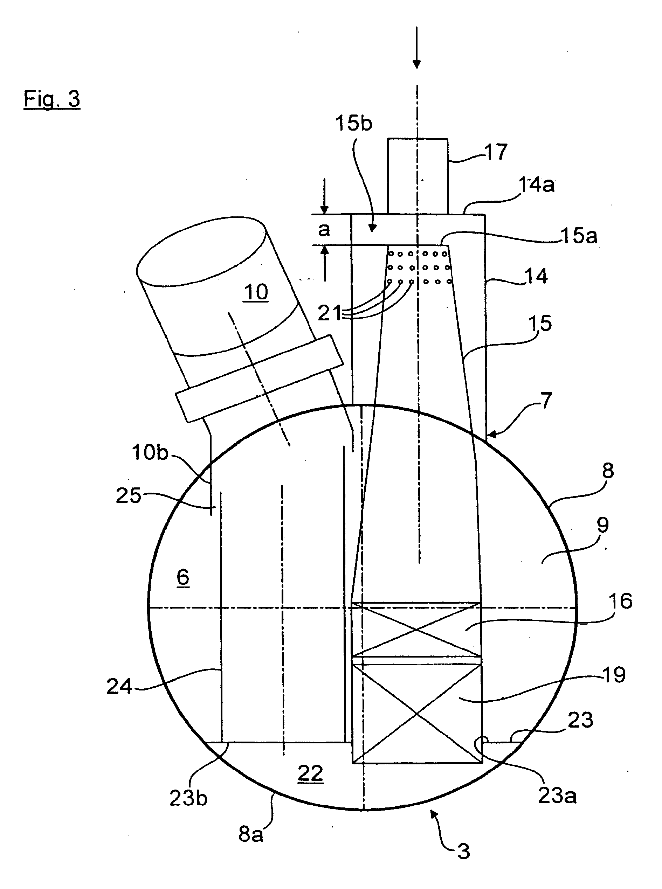

Die Fig. 3 zeigt eine alternative Ausführungsform des in der Ausströmkammer 6 des Vorschalldämpfers 3 angeordneten Reaktors 7, die jedoch nur soweit beschrieben ist, als sie sich wesentlich von der Ausführung gemäß Fig. 2 unterscheidet. Funktionell gleiche Teile sind mit gleichen Bezugszeichen versehen.

Abweichend zur Fig. 2 ist in der Ausströmkammer 6 des Vorschalldämpfers 3 im in der Zeichnung unteren Bereich eine, eine integrierte Leitung bildende Überströmkammer 22 angeordnet, die eine obere Trennwand 23 aufweist. Die Überströmkammer 22 wird im Übrigen begrenzt von der Stirnwand 9, einem Umfangsabschnitt 8a der Umfangswand 8 und von einer auf der Zeichnung nicht ersichtlichen Vorderwand, die hier lediglich beispielhaft parallel zur Stirnwand 9 die Überströmkammer 22 gasdicht abschließt.

Die Überströmkammer 22 beziehungsweise die besagte Vorderwand weist dabei einen derartigen Abstand zur stromauf liegenden Austrittsfläche des DPF 5 auf, dass sie keine Strömungsbehinderung für diesen bildet.

In die obere Trennwand 23 ragt in eine entsprechende Ausnehmung 23a der Trennwand 23 das trichterförmige Rohr 15 des Reaktors 7 mit den hier zwei nachgeschalteten Mischerstrukturen 16, 19 ein.

Ferner führt von der Trennwand 23 mit einer korrespondierenden Ausnehmung 23b ein Rohrabschnitt. 24 weg, der über einen Ringspalt 25 als Bypass definierten Querschnittes mit einem erweiterten Endabschnitt 10b des Zwischenrohres 10 kommuniziert. Der Ringspalt 25 liegt dazu wie ersichtlich innerhalb der Abströmkammer 6 des Vorschalldämpfers 3.

Anstelle über den Rohrbogen 18 gemäß Fig. 2 wird somit der den Reaktor 7 durchströmende Abgasteilstrom über die Überströmkammer 22 und den Rohrabschnitt 24 zum Zwischenrohr 10 geführt, während der zweite Abgasteilstrom über den Ringspalt 25 als Bypass direkt dem Zwischenrohr 10 zugeführt wird.

Der Reaktor 7, der Rohrbogen 18 und der Abschnitt 10a beziehungsweise der Rohrabschnitt 24 sind in der Ausströmkammer 6 räumlich so anzuordnen, dass der Ausströmquerschnitt des stromauf liegenden DPF 5 nicht nachteilig beeinflusst wird beziehungsweise eine homogene Durchströmung desselben sichergestellt ist.

Die Erfindung ist nicht auf die dargestellten Ausführungsbeispiele beschränkt. Insbesondere können auch Kombinationen aus den Ausführungen gemäß den Fig. 2 und 3 verwirklicht werden. Das Zwischenrohr 10 kann gegebenenfalls nicht nach oben, sondern seitlich ausgerichtet mit extrem kurzer Rohrlänge zum Hauptschalldämpfer 11 geführt sein.

## Patentansprüche

1. Vorrichtung zur Nachbehandlung von Abgasen einer Brennkraftmaschine, mit wenigstens einem in den Abgasstrom geschalteten Reaktor (7), der einen Reduktionsmittelzersetzungskatalysator, insbesondere einen Hydrolysekatalysator, aufweist und mit einer stromauf hierzu angeordneten Dosiereinrichtung (17) zur Zuführung von Reduktionsmittel, insbesondere zur Zuführung einer wässrigen Harnstofflösung, wobei dem Reaktor (7) bevorzugt wenigstens eine weitere Katalysatoreinrichtung, insbesondere wenigstens ein SCR- Katalysator, nachgeschaltet ist, wobei der Reaktor (7) in ein von einem Abgasstrom durchströmtes Gehäuse (3) integriert ist, von dem ein Totrohr (14) abragt, in das ein Reaktor-Einlassrohr (15) des Reaktors (7) mündet oder einragt, wobei ein Abgasstrom (S2), vorzugsweise ein von einem Hauptabgasstrom abgezweigter Teilstrom, aus dem Gehäuse (3) über wenigstens eine Einströmöffnung, vorzugsweise über wenigstens einen zwischen Totrohr (14) und Reaktor-Einlassrohr (15) ausgebildeten Strömungsspalt (8b), in das Totrohr (14) einströmt, in dem der Abgasstrom (S2) nach einer ein- oder mehrmaligen Strömungsumlenkung in einem Strömungsumlenkbereich (15b), in dem dem Abgasstrom (S2) mittels der Dosiereinrichtung ein Reduktionsmittel zudosierbar ist, in das Reaktor- Einlassrohr (15) einströmt **dadurch gekennzeichnet, dass** ein in das Gehäuse (3) einmündendes oder einragendes Ausströmrohr (10), mittelbar mittels einer im Gehäuse (3) angeordneten Überströmeinrichtung (18; 22) des Reaktors (7) oder unmittelbar mit dem Einlassrohr (15) strömungsleitend verbunden ist.

2. Vorrichtung nach Anspruch 1, **dadurch gekennzeichnet, dass** im Strömungsumlenkbereich (15b) eine am Totrohr (14) gehalterte Düse (17) der Dosiereinrichtung angeordnet ist, die einer Einlassöffnung (15a) des bevorzugt einen Einlasstrichter aufweisenden Reaktor-Einlassrohrs (15) mit einem definierten Abstand (a) gegenüberliegt.

3. Vorrichtung nach Anspruch 1 oder 2, **dadurch gekennzeichnet, dass** das Reaktor-Einlassrohr (15) zumindest abschnittweise perforiert ausgebildet ist und/oder in einer Gehäusewand des Gehäuses (3) mündet und/oder gasdicht durch diese hindurchgeführt ist.

4. Vorrichtung nach einem der Ansprüche 1 bis 3, **dadurch gekennzeichnet, dass** das Totrohr (14) im montierten Zustand der Vorrichtung von einem geodätisch oberen Gehäusewandbereich abragt, insbesondere in etwa vertikal nach oben abragt.

5. Vorrichtung nach einem der Ansprüche 1 bis 4, **dadurch gekennzeichnet, dass** der in das Totrohr (14) und/oder in das Reaktor-Einlassrohr (15) einströmende Abgasstrom (S2) im Wesentlichen senkrecht zur Strömungsrichtung des in das Gehäuse (3) einströmenden Abgasstroms ausgerichtet ist.

6. Abgasanlage nach einem der Ansprüche 1 bis 5, **dadurch gekennzeichnet, dass** nur ein Teilstrom des in das Gehäuse (3) einströmenden Abgasstroms durch den Reaktor (7) geleitet ist, wobei die Abgasteilströmung über den Strömungsspalt (8b) und das Totrohr (14) zunächst in Richtung nach außerhalb des Gehäuses (3) und anschließend über das Reaktor-Einlassrohr (15) in Strömungsumkehr wieder nach innerhalb des Gehäuses (3), insbesondere zur Vermischung mit dem Restabgas, geleitet ist.

7. Vorrichtung nach einem der Ansprüche 1 bis 6, **dadurch gekennzeichnet, dass** das in das Gehäuse (3) einmündende oder einragende Ausströmrohr (10) durch ein Zwischenrohr zwischen einem Vorschalldämpfer (3) und einem Hauptschalldämpfer (11) gebildet ist.

8. Vorrichtung nach einem der vorhergehenden Ansprüche, **dadurch gekennzeichnet, dass** die Überströmeinrichtung (18; 22) so ausgebildet ist, dass der durch das Reaktor-Einlassrohr (15) einströmende Abgasstrom (S2) vor dessen Ausströmen durch das bevorzugt benachbart zum Totrohr (14) angeordnete Ausströmrohr (10) entlang einer definierten wenigstens einen Umlenkbereich aufweisenden und/oder wenigstens einen Teilbereich des Gehäusevolumens durchgreifenden und/oder wenigstens einen Reduktionsmittelkatalysator (16, 19) aufweisenden Reaktionsstrecke strömt.

9. Vorrichtung nach Anspruch 8, **dadurch gekennzeichnet, dass** die Überströmeinrichtung (18; 22) so ausgebildet ist, dass der in das Reaktor-Einlassrohr (15) einströmende Abgasstrom (S2) in etwa bis zu einem gegenüberliegenden Gehäusewandbereich geführt wird und/oder um in etwa 180° umgelenkt wird, bevor dieser Abgasstrom (S2) über das benachbart zum Totrohr (14) in der Gehäusewand mündende Ausströmrohr (10) abströmt.

10. Vorrichtung nach einem der vorhergehenden Ansprüche, **dadurch gekennzeichnet, dass** das Reaktor-Einlassrohr (15) mittels einer Rohrleitung (18), insbesondere mittels eines einen definierten Bogenwinkel aufweisenden Rohrbogens, mit dem Ausströmrohr (10), insbesondere mit einem in das Gehäuse (3) einragenden Abschnitt (10a) des Ausströmrohres (10), verbunden ist, wobei im ausströmrohrnahen Rohrleitungsbereich und/oder in dem einragenden Abschnitt (10a) wenigstens eine Bypass-Öffnung (20) vorgesehen ist, die einen Bypass zu einem umgebenden Gehäusebereich bildet.

11. Vorrichtung nach einem der vorhergehenden Ansprüche, **dadurch gekennzeichnet, dass** im Gehäuse (3) eine gasdicht abgeteilte Überströmkammer (22) als Überströmeinrichtung ausgebildet ist, in die das Reaktor-Einlassrohr (15) und ein in das Gehäuse (3) einragender Abschnitt (24) des Ausströmrohres (10) einmünden, wobei im Abschnitt (24) des Ausströmrohres (10) und/oder im Bereich der Überströmkammer (22) wenigstens eine Bypass-Öffnung, insbesondere Perforationslöcher und/oder ein Ringspalt (25), vorgesehen ist, die einen Bypass zu einem umgebenden Gehäusebereich bildet.

12. Vorrichtung nach einem der vorhergehenden Ansprüche, **dadurch gekennzeichnet, dass** im Bereich des Reaktor-Einlassrohres (15) und/oder im Bereich der Überströmeinrichtung (18; 22) zumindest ein Reduktionsmittelzersetzungskatalysator vorgesehen ist, wobei bevorzugt vorgesehen ist, dass der Reduktionsmittelzersetzungskatalysator durch wenigstens eine katalytisch beschichtete Mischerstruktur (16, 19), insbesondere wenigstens eine mittels einer TiO-Beschichtung versehene Mischerstruktur (16, 19), gebildet ist.

13. Vorrichtung nach einem der Ansprüche 1 bis 12, **dadurch gekennzeichnet, dass** das Gehäuse (3) durch einen in ein Abgasrohr einer Abgasanlage eingeschalteten Schalldämpfer, vorzugsweise durch eine Ausströmkammer (6) eines Schalldämpfers (3), gebildet ist.

14. Vorrichtung nach Anspruch 13, **dadurch gekennzeichnet, dass** die Abgasanlage mehrere Schalldämpfer aufweist und der wenigstens eine aus der Ausströmkammer (6) eines Vorschalldämpfers (3) ausströmende Abgasstrom (S1, S2) über ein bevorzugt quer zur Strömungsrichtung des Vorschalldämpfers (3) ausgerichtetes Zwischenrohr als Ausströmrohr (10) zu einem Hauptschalldämpfer (11) geführt ist.

15. Vorrichtung nach Anspruch 14, **dadurch gekennzeichnet, dass** bei mehreren Schalldämpfern vorgesehen ist, dass im Vorschalldämpfer (3) stromauf des Reduktionsmittelzersetzungskatalysators (7) ein Oxidationskatalysator (4) und/oder ein Dieselpartikelfilter (5) angeordnet ist, wobei bevorzugt weiter vorgesehen ist, dass der dem Vorschalldämpfer (3) über ein Zwischenrohr (10) nachgeschaltete Hauptschalldämpfer (11) zumindest einen SCR-Katalysator mit entsprechendem NH₃-Sperrkatalysator aufweist.

## Claims

1. A device for the aftertreatment of exhaust gases of an internal combustion engine, having at least one reactor (7) which is connected into the exhaust-gas flow and which has a reducing agent decomposition catalytic converter, in particular a hydrolysis catalytic converter, and having arranged upstream thereof a dosing device (17) for the supply of reducing agent, in particular for the supply of an aqueous urea solution, wherein it is preferable for at least one further catalytic converter device, in particular at least one SCR catalytic converter, to be connected downstream of the reactor (7), wherein the reactor (7) is integrated into a housing (3) through which an exhaust-gas flow passes and from which there projects a dead pipe (14) into which a reactor inlet pipe (15) of the reactor (7) issues or projects, wherein an exhaust-gas flow (S2), preferably a partial flow branched off from a main exhaust-gas flow, flows out of the housing (3) via at least one inflow opening, preferably via at least one flow gap (8b) formed between the dead pipe (14) and reactor inlet pipe (15), into the dead pipe (14), in which the exhaust-gas flow (S2) flows into the reactor inlet pipe (15) after being subjected to one or more flow diversions in a flow diversion region (15b) in which a reducing agent can be dosed into the exhaust-gas flow (S2) by means of the dosing device, **characterized in that** an outflow pipe (10) which issues or projects into the housing (3) is connected in flow-conducting fashion to the inlet pipe (15) indirectly, via a flow transfer device (18; 22), arranged in the housing (3), of the reactor (7), or directly.

2. The device according to Claim 1, **characterized in that** a nozzle (17) of the dosing device is arranged in the flow diversion region (15b), which nozzle is retained on the dead pipe (14) and is situated opposite, at a defined distance (a) from, an inlet opening (15a) of the reactor inlet pipe (15) which preferably has an inlet funnel.

3. The device according to Claim 1 or 2, **characterized in that** the reactor inlet pipe (15) is of perforated form at least in sections and/or issues into a housing wall of the housing (3) and/or is led in gas-tight fashion through said housing wall.

4. The device according to one of Claims 1 to 3, **characterized in that**, when the device is in the assembled state, the dead pipe (14) projects, in particular approximately vertically upward, from a geodetically upper housing wall region.

5. The device according to one of Claims 1 to 4, **characterized in that** the exhaust-gas flow (S2) flowing into the dead pipe (14) and/or into the reactor inlet pipe (15) is oriented substantially perpendicular to the flow direction of the exhaust-gas flow flowing into the housing (3).

6. The device according to one of Claims 1 to 5, **characterized in that** only a partial flow of the exhaust-gas flow flowing into the housing (3) is conducted through the reactor (7), wherein the partial exhaust-gas flow is conducted via the flow gap (8b) and the dead pipe (14) initially toward the outside of the housing (3) and subsequently, with a flow reversal, via the reactor inlet pipe (15) toward the inside of the housing (3) again, in particular for the purpose of mixing with the remaining exhaust gas.

7. The device according to one of Claims 1 to 6, **characterized in that** the outflow pipe (10) that issues or projects into the housing (3) is formed by an intermediate pipe between a pre-silencer (3) and a main silencer (11).

8. The device according to one of the preceding claims, **characterized in that** the flow transfer device (18; 22) is designed such that, before flowing out through the outflow pipe (10) arranged preferably adjacent to the dead pipe (14), the exhaust-gas flow (S2) that flows in through the reactor inlet pipe (15) flows along a defined reaction path which has at least one diversion region and/or which extends through at least one partial region of the housing volume and/or which has at least one reducing agent catalytic converter (16, 19).

9. The device according to Claim 8, **characterized in that** the flow transfer device (18; 22) is designed such that the exhaust-gas flow (S2) flowing into the reactor inlet pipe (15) is conducted approximately as far as an opposite housing wall region and/or is diverted through approximately 180° before said exhaust-gas flow (S2) flows out via the outlet pipe (10) which issues into the housing wall adjacent to the dead pipe (14).

10. The device according to one of the preceding claims, **characterized in that** the reactor inlet pipe (15) is connected to the outflow pipe (10), in particular to a section (10a) of the outflow pipe (10) which projects into the housing (3), by means of a pipeline (18), in particular by means of a pipe bend which has a defined bend angle, wherein, in the pipeline region adjacent to the outflow pipe and/or in the projecting-in section (10a), there is provided at least one bypass opening (20) which forms a bypass to a surrounding housing region.

11. The device according to one of the preceding claims, **characterized in that**, in the housing (3), there is formed, as a flow transfer device, a flow transfer chamber (22) which is divided off in a gas-tight manner and which has issuing into it the reactor inlet pipe (15) and a section (24), which projects into the housing (3), of the outflow pipe (10), wherein, in the section (24) of the outflow pipe (10) and/or in the region of the flow transfer chamber (22), there is provided at least one bypass opening, in particular perforation holes and/or an annular gap (25) which forms a bypass to a surrounding housing region.

12. The device according to one of the preceding claims, **characterized in that** at least one reducing agent decomposition catalytic converter is provided in the region of the reactor inlet pipe (15) and/or in the region of the flow transfer device (18; 22), wherein provision is preferably made for the reducing agent decomposition catalytic converter to be formed by at least one catalytically coated mixer structure (16, 19), in particular at least one mixer structure (16, 19) provided with a TiO coating.

13. The device according to one of Claims 1 to 12, **characterized in that** the housing (3) is formed by a silencer incorporated into an exhaust pipe of an exhaust system, preferably by an outflow chamber (6) of a silencer (3).

14. The device according to Claim 13, **characterized in that** the exhaust system has multiple silencers, and the at least one exhaust-gas flow (S1, S2) flowing out of the outflow chamber (6) of a pre-silencer (3) is conducted to a main silencer (11) via an intermediate pipe, which is oriented preferably transversely with respect to the flow direction of the pre-silencer (3), as outflow pipe (10).

15. The device according to Claim 14, **characterized in that**, in the case of multiple silencers, provision is made for an oxidation catalytic converter (4) and/or a diesel particle filter (5) to be arranged in the pre-silencer (3) upstream of the reducing agent decomposition catalytic converter (7), wherein provision is preferably also made for the main silencer (11), which is connected downstream of the pre-silencer (3) via an intermediate pipe (10), to have at least one SCR catalytic converter with corresponding NH₃ barrier catalytic converter.

## Revendications

1. Dispositif de post-traitement de gaz d'échappement d'un moteur à combustion interne, comprenant au moins un réacteur (7) raccordé dans le flux de gaz d'échappement, lequel présente un catalyseur de décomposition par agent réducteur, en particulier un catalyseur à hydrolyse, et comprenant un dispositif de dosage (17) disposé en amont par rapport à celui-ci, pour l'alimentation d'agent réducteur, en particulier pour l'alimentation d'une solution d'urée aqueuse, de préférence au moins un dispositif catalyseur supplémentaire, en particulier au moins un catalyseur SCR, étant raccordé en aval du réacteur (7), le réacteur (7) étant intégré dans un boîtier (3) parcouru par un flux de gaz d'échappement, depuis lequel boîtier part un tube mort (14) dans lequel débouche ou pénètre un tube d'entrée de réacteur (15) du réacteur (7), un flux de gaz d'échappement (S2), de préférence un flux partiel dérivé d'un flux de gaz d'échappement principal, affluant dans le tube mort (14) hors du boîtier (3) par le biais d'au moins une ouverture d'afflux, de préférence par le biais d'au moins une fente d'écoulement (8b) réalisée entre le tube mort (14) et le tube d'entrée de réacteur (15), dans lequel tube mort le flux de gaz d'échappement (S2), après une déviation d'écoulement unique ou multiple, afflue dans le tube d'entrée de réacteur (15) dans une région de déviation de l'écoulement (15b) dans laquelle un agent réducteur peut être dosé au moyen du dispositif de dosage dans le flux de gaz d'échappement (S2), **caractérisé en ce qu'**un tube d'évacuation (10) débouchant ou pénétrant dans le boîtier (3) est connecté au tube d'entrée (15) de manière à guider l'écoulement et ce directement, ou indirectement au moyen d'un dispositif de trop-plein (18 ; 22) du réacteur (7) disposé dans le boîtier (3).

2. Dispositif selon la revendication 1, **caractérisé en ce que** dans la région de déviation de l'écoulement (15b) est disposée une buse (17) du dispositif de dosage retenue sur le tube mort (14), laquelle est en regard, à une distance définie (a), d'une ouverture d'entrée (15a) du tube d'entrée de réacteur (15) présentant de préférence un entonnoir d'entrée.

3. Dispositif selon la revendication 1 ou 2, **caractérisé en ce que** le tube d'entrée de réacteur (15) est réalisé sous forme au moins partiellement perforée et/ou débouche dans une paroi de boîtier du boîtier (3) et/ou est guidé à travers celle-ci de manière étanche aux gaz.

4. Dispositif selon l'une quelconque des revendications 1 à 3, **caractérisé en ce que** le tube mort (14), dans l'état monté du dispositif, part d'une région de paroi de boîtier géodésiquement supérieure, en particulier part approximativement verticalement vers le haut.

5. Dispositif selon l'une quelconque des revendications 1 à 4, **caractérisé en ce que** le flux de gaz d'échappement (S2) affluant dans le tube mort (14) et/ou dans le tube d'entrée de réacteur (15) est orienté essentiellement perpendiculairement à la direction d'écoulement du flux de gaz d'échappement affluant dans le boîtier (3).

6. Dispositif selon l'une quelconque des revendications 1 à 5, **caractérisé en ce que** seulement un flux partiel du flux de gaz d'échappement affluant dans le boîtier (3) est guidé à travers le réacteur (7), l'écoulement partiel de gaz d'échappement étant conduit par le biais de la fente d'écoulement (8b) et du tube mort (14) d'abord dans la direction de l'extérieur du boîtier (3) et ensuite par le biais du tube d'entrée de réacteur (15) dans un écoulement inverse à nouveau à l'intérieur du boîtier (3), en particulier en vue de son mélange avec le gaz d'échappement résiduel.

7. Dispositif selon l'une quelconque des revendications 1 à 6, **caractérisé en ce que** le tube d'évacuation (10) débouchant ou pénétrant dans le boîtier (3) est formé par un tube intermédiaire entre un pré-silencieux (3) et un silencieux principal (11).

8. Dispositif selon l'une quelconque des revendications précédentes, **caractérisé en ce que** le dispositif de trop-plein (18 ; 22) est réalisé de telle sorte que le flux de gaz d'échappement (S2) affluant à travers le tube d'entrée de réacteur (15) s'écoule, avant son évacuation à travers le tube d'évacuation (10) disposé de préférence à proximité du tube mort (14), le long d'une section de réaction définie présentant au moins une région de déviation et/ou traversant au moins une région partielle du volume de boîtier et/ou présentant au moins un catalyseur à agent réducteur (16, 19).

9. Dispositif selon la revendication 8, **caractérisé en ce que** le dispositif de trop-plein (18 ; 22) est réalisé de telle sorte que le flux de gaz d'échappement (S2) affluant dans le tube d'entrée de réacteur (15) soit guidé approximativement jusqu'à une région de paroi de boîtier opposée et/ou soit dévié d'environ 180° avant que ce flux de gaz d'échappement (S2) ne soit évacué par le biais du tube d'évacuation (10) débouchant dans la paroi de boîtier à proximité du tube mort (14).

10. Dispositif selon l'une quelconque des revendications précédentes, **caractérisé en ce que** le tube d'entrée de réacteur (15) est connecté au moyen d'une conduite tubulaire (18), en particulier au moyen d'un coude tubulaire présentant un angle de coudage défini, au tube d'évacuation (10), notamment à une section (10a) du tube d'évacuation (10) pénétrant dans le boîtier (3), au moins une ouverture de dérivation (20) étant prévue dans la région de la conduite tubulaire proche du tube d'évacuation et/ou dans la section (10a) pénétrant dans le boîtier, laquelle ouverture de dérivation forme une dérivation vers une région périphérique du boîtier.

11. Dispositif selon l'une quelconque des revendications précédentes, **caractérisé en ce qu'**une chambre de trop-plein (22) divisée de manière étanche aux gaz est réalisée en tant que dispositif de trop-plein dans le boîtier (3), dans laquelle débouchent le tube d'entrée de réacteur (15) et une section (24) du tube d'évacuation (10) pénétrant dans le boîtier (3), dans la section (24) du tube d'évacuation (10) et/ou dans la région de la chambre de trop-plein (22) étant prévues au moins une ouverture de dérivation, en particulier des trous de perforation et/ou une fente annulaire (25), laquelle forme une dérivation vers une région périphérique du boîtier.

12. Dispositif selon l'une quelconque des revendications précédentes, **caractérisé en ce que** dans la région du tube d'entrée de réacteur (15) et/ou dans la région du dispositif de trop-plein (18 ; 22) est prévu au moins un catalyseur de décomposition par agent réducteur, le catalyseur de décomposition par agent réducteur étant de préférence prévu pour être formé par au moins une structure de mélangeur à revêtement catalytique (16, 19), notamment par au moins une structure de mélangeur (16, 19) pourvue d'un revêtement de TiO.

13. Dispositif selon l'une quelconque des revendications 1 à 12, **caractérisé en ce que** le boîtier (3) est formé par un silencieux incorporé dans un tube d'échappement d'une installation de gaz d'échappement, de préférence par une chambre d'évacuation (6) d'un silencieux (3).

14. Dispositif selon la revendication 13, **caractérisé en ce que** l'installation de gaz d'échappement présente plusieurs silencieux et l'au moins un flux de gaz d'échappement (S1, S2) évacué de la chambre d'évacuation (6) d'un pré-silencieux (3) est guidé jusqu'à un silencieux principal (11) par le biais d'un tube intermédiaire de préférence orienté transversalement par rapport à la direction d'écoulement du pré-silencieux (3) en tant que tube d'évacuation (10).

15. Dispositif selon la revendication 14, **caractérisé en ce que** l'on prévoit, dans le cas de plusieurs silencieux, de disposer dans le pré-silencieux (3), en amont du catalyseur de décomposition par agent réducteur (7), un catalyseur d'oxydation (4) et/ou un filtre à particules diesel (5), le silencieux principal (11) raccordé en aval du pré-silencieux (3) par le biais d'un tube intermédiaire (10) étant de préférence en outre prévu pour présenter au moins un catalyseur SCR avec un catalyseur barrière de NH₃ correspondant.
